# EUROPEAN PATENT APPLICATION

(11) **EP 4 024 026 A1**
(43) Date of publication of application: **06.07.2022**
(21) Application number: 20859197.4
(22) Date of filing: 14.05.2020
(51) Int. Cl.: G01N 15/12, G01N 27/00

(54) **PARTICLE ANALYSIS DEVICE**

(30) Priority: 28.08.2019 JP 2019155824
(71) Applicant: NOK Corporation, Tokyo 105-8585 (JP)
(72) Inventor: MUROTA, Yuki, Fujisawa-shi, Kanagawa 251-0042 (JP); YOSHITOMI, Takumi, Fujisawa-shi, Kanagawa 251-0042 (JP); FUJISAWA, Naohiro, Fujisawa-shi, Kanagawa 251-0042 (JP)
(74) Representative: Global IP Europe Patentanwaltskanzlei
(86) International application number: PCT/JP2020/019273
(87) International publication number: WO 2021/038977

(57) **Abstract**

A particle analysis device includes an upper liquid space in which a first liquid is stored, a lower liquid space in which a second liquid is stored, a connection pore connecting the upper liquid space to the lower liquid space, and first to fourth holes. Each of the first to fourth holes has an opening that opens at a top surface of the particle analysis device. The first and second holes extend to the upper liquid space. The third and fourth holes extend to the lower liquid space. A first electrode applies an electric potential to the first liquid in the upper liquid space through the first hole, and a second electrode applies an electric potential to the second liquid in the lower liquid space through the third hole. The opening of at least one of the first hole and the second hole has an area that is greater than the rest of the hole. The opening of at least one of the third hole and the fourth hole has an area that is greater than the rest of the hole.

## Description

### TECHNICAL FIELD

The present invention relates particle analysis devices for analyzing particles contained in a liquid.

### BACKGROUND ART

A particle analysis device having two spaces has been proposed for analyzing particles, such as exosomes, pollens, viruses, and bacteria (Patent Documents 1-3). This type of particle analysis device has a pore connecting the two spaces, in which a liquid is stored in one space and another liquid containing particles to be analyzed is stored in the other space. These spaces are provided with different electrical potentials for causing electrophoresis, so that particles pass through the pore. As the particles pass through the pore, the current value flowing through the liquid changes. By observing the change in the current value, characteristics (e.g., type, shape, and size) of the particles that passed through the pore can be analyzed. For example, it is possible to determine the number of particles of a certain type contained in the liquid.

### BACKGROUND DOCUMENT(S)

### Patent Document(s)

Patent Document 1: JP-A-2014-174022
Patent Document 2: JP-A-2017-156168
Patent Document 3: WO 2013/13430 A

### SUMMARY OF THE INVENTION

In this type of particle analysis device, for accurate analysis, it is desirable that the two liquids used do not come into contact at any point other than the desired pore through which the particles pass.

Accordingly, the present invention provides a particle analysis device that can inhibit contact between two liquids used at locations other than the desired pore through which particles pass.

According to an aspect of the present invention, there is provided a particle analysis device including an upper liquid space adapted to store a first liquid; a lower liquid space disposed below the upper liquid space and adapted to store a second liquid; a connection pore connecting the upper liquid space to the lower liquid space; a first hole having an opening that opens at a top surface of the particle analysis device, the first hole extending from the top surface of the particle analysis device to the upper liquid space, the first liquid flowing through the first hole; a second hole having an opening that opens at the top surface, the second hole extending from the top surface to the upper liquid space, the first liquid flowing through the second hole; a third hole having an opening that opens at the top surface, the third hole extending from the top surface to the lower liquid space, the second liquid flowing through the third hole; a fourth hole having an opening that opens at the upper surface, the fourth hole extending from the top surface to the lower liquid space, the second liquid flowing through the fourth hole; a first electrode adapted to apply an electric potential to the first liquid in the upper liquid space through the first hole; and a second electrode adapted to apply an electric potential to the second liquid in the lower liquid space through the third hole. The opening of at least one of the first hole and the second hole has an area that is greater than the rest of the hole. The opening of at least one of the third hole and the fourth hole has an area that is greater than the rest of the hole.

In this aspect, when supplying the first liquid to the upper liquid space, the opening of either the first hole or the second hole, through which the first liquid can flow, is used for an inlet for the first liquid, and the other opening is used for an outlet for air pushed out by the first liquid. On the other hand, when supplying the second liquid to the lower liquid space, the opening of either the third hole or the fourth hole, through which the second liquid can flow, is used for an inlet for the second liquid, and the other opening is used for an outlet for air pushed out by the second liquid. For accurate analysis, it is preferable that the first liquid and the second liquid do not overflow the air outlets and do not come into contact with each other on the top surface of the particle analysis device. In this aspect, the opening of at least one of the first hole A and the second hole has an area that is greater than that of the rest of the hole, so that when the opening having a greater area is used for the air outlet, the first liquid can be prevented from overflowing from the air outlet. In addition, the opening of at least one of the third hole and the fourth hole has an area that is greater than that of the rest of the hole, so that the second liquid can be prevented from overflowing from the air outlet when the opening having a greater area is used for the air outlet. Thus, contact between the used two liquids can be inhibited at locations other than the desired connection pore through which the particles pass.

### BRIEF DESCRIPTION OF THE DRAWINGS

Fig. 1 is a perspective view showing a particle analysis device according to a first embodiment of the present invention;
Fig. 2 is a side view of the particle analysis device shown in Fig. 1;
Fig. 3 is a plan view of the particle analysis device of Fig. 1;
Fig. 4 is a conceptual diagram showing the principle of particle analysis used in the particle analysis device of Fig. 1;
Fig. 5 is an exploded view of the particle analysis device shown in Fig. 1;
Fig. 6 is an enlarged plan view showing a part of a plate on which electrodes of the particle analysis device of Fig. 1 are formed;
Fig. 7 is an enlarged cross-sectional view of the plate in Fig. 6 and a plate above it taken along line VII-VII;
Fig. 8 is an enlarged cross-sectional view of a plate of the comparative example and a plate above it;
Fig. 9 is an enlarged cross-sectional view of the plate of Fig. 6 according to a modification of the first embodiment and a plate above it taken along line VII-VII;
Fig. 10 is an enlarged cross-sectional view of the plate of Fig. 6 according to another modification of the first embodiment and a plate above it taken along line VII-VII;
Fig. 11 is an enlarged plan view of the plate in Fig. 10;
Fig. 12 is a side view showing a particle analysis device according to another comparative example;
Fig. 13 is an exploded view of the particle analysis device shown in Fig. 12;
Fig. 14 is a perspective view showing a particle analysis device in accordance with a second embodiment of the present invention;
Fig. 15 is a side view of the particle analysis device shown in Fig. 14;
Fig. 16 is an exploded view of the particle analysis device shown in Fig. 14;
Fig. 17 is an exploded view of a particle analysis device according to a third embodiment of the present invention;
Fig. 18 is a side view of the particle analysis device shown in Fig. 17;
Fig. 19 is an enlarged plan view showing a part of a plate on which electrodes are formed in a particle analysis device according to a modification;
Fig. 20 is an enlarged cross-sectional view of the plate in Fig. 19 and a plate above it taken along line XX-XX;
Fig. 21 is a side view of a particle analysis device according to another modification of the first embodiment;
Fig. 22 is a side view of a particle analysis device according to a modification of the third embodiment;
Fig. 23 is a side view of a particle analysis device according to another modification;
Fig. 24 is a side view of a particle analysis device according to another modification; and
Fig. 25 is an exploded view of the particle analysis device shown in Fig. 24.

### DESCRIPTION OF EMBODIMENTS

Hereinafter, with reference to the accompanying drawings, various embodiments according to the present invention will be described. It is of note that the drawings are not necessarily to scale, and certain features may be exaggerated or omitted.

### First Embodiment

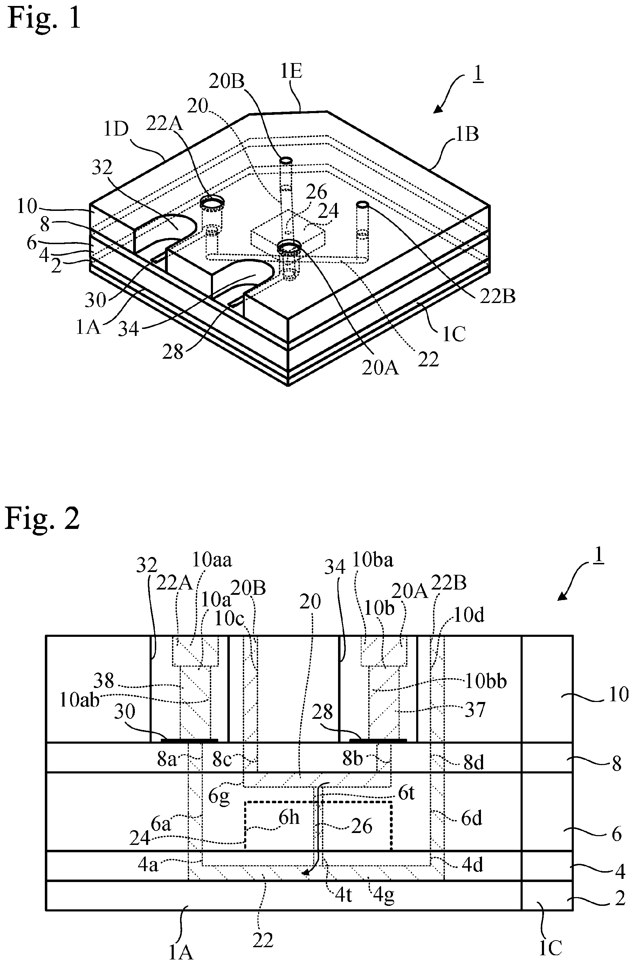

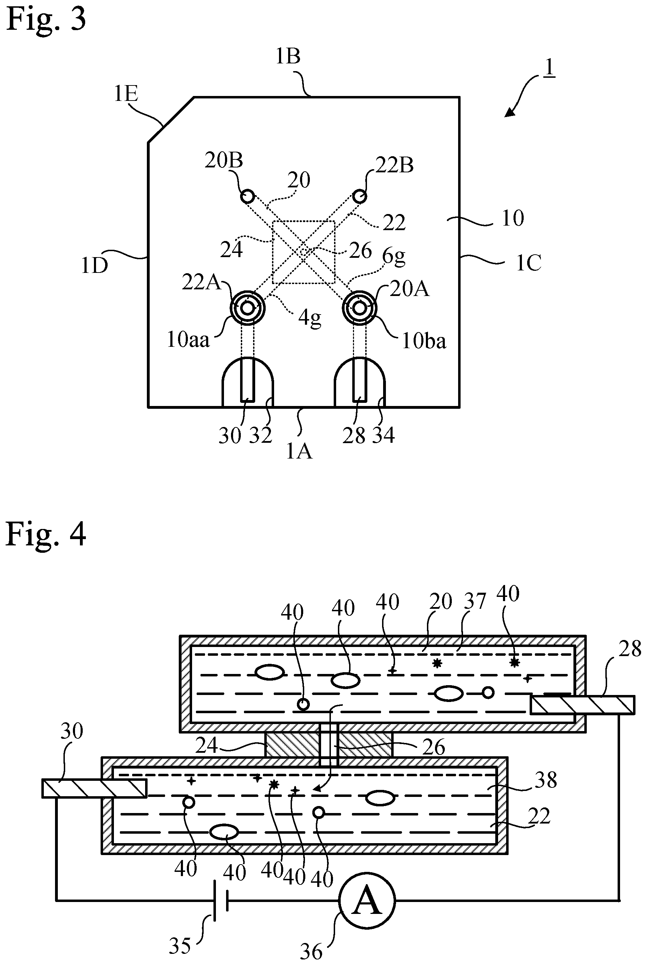

As shown in Fig. 1, a particle analysis device 1 of a first embodiment has a shape of a pentagonal prism and has five side surfaces 1A, 1B, 1C, 1D, and 1E. As shown in the plan view of Fig. 3, the particle analysis device 1 has a pentagonal contour with one corner of an approximately square being cut out when viewed from above. Fig. 2 is a side view of the particle analysis device 1 showing two side surfaces 1A and 1C.

As shown in Figs. 1, 2, and 3, the particle analysis device 1 has an upper liquid space 20, a lower liquid space 22, and a connection pore 26. Each of the liquid spaces 20 and 22 extends linearly in a horizontal direction, in which a first liquid 37 is stored in the first liquid space 20 and a second liquid 38 is stored in the lower liquid space 22. In Fig. 2, the first liquid 37 stored in the upper liquid space 20 and the second liquid 38 stored in the lower liquid space 22 are shown with different hatching patterns. The lower liquid space 22 is arranged below the upper liquid space 20, and the liquid spaces 20 and 22 are connected to each other by the connection pore 26. As shown in Fig. 3, the liquid spaces 20 and 22 intersect each other at a right angle in plan view.

The particle analysis device 1 also includes a first hole 20A, a second hole 20B, a third hole 22A, and a fourth hole 22B. first hole 20A, second hole 20B, third hole 22A and fourth hole 22B. Each of the first hole 20A, the second hole 20B, the third hole 22A, and the fourth hole 22B has an opening that opens at the top surface of the particle analysis device 1.

The first hole 20A and the second hole 20B extend vertically from the top surface of the particle analysis device 1 to the upper liquid space 20, and the first liquid 37 can flow in these holes. The first hole 20A, the second hole 20B, and the upper liquid space 20 form a reservoir for the first liquid 37.

The third hole 22A and the fourth hole 22B extend vertically from the top surface of the particle analysis device 1 to the lower liquid space 22, and the second liquid 38 can flow in these holes. The third hole 22A, the fourth hole 22B, and the lower liquid space 22 form another reservoir for the second liquid 38.

Furthermore, the particle analysis device 1 has a first electrode 28 and a second electrode 30. The first electrode 28 is used for applying an electric potential to the first liquid 37 in the first liquid space 20 through the first hole 20A. The second electrode 30 is used for applying an electric potential through the third hole 22A to the second liquid 38 in the lower liquid space 22. The electric potential applied by the second electrode 30 is different from that applied by the first electrode 28. For example, the second electrode 30 is an anode and the first electrode 28 is a cathode. Since the liquid spaces 20 and 22 are connected via the connection pore 26, an electric current flows through the first liquid 37 and the second liquid 38 inside the liquid spaces 20 and 22.

Fig. 4 schematically illustrates the principle of particle analysis used in the particle analysis device 1. In the upper liquid space 20, the first liquid 37 containing particles 40 to be analyzed is stored. In the lower liquid space 22, a second liquid 38, which does not originally contain the particles 40, is stored. However, the second liquid 38 stored in the lower liquid space 22 may contain the particles 40. The liquid spaces 20 and 22 are connected to each other via the connection pore 26 that is a through-hole formed in a chip 24. A DC (direct current) power supply 35 and a current meter 36 are connected to the first electrode 28 and the second electrode 30. The DC power supply 35 is, for example, a battery, but is not limited to a battery.

Electrophoresis caused by the potential difference applied to the electrodes 28 and 30 causes the particles 40 contained in the first liquid 37 stored in the lowermost plate 2 to pass the connection pore 26 and to flow into the second liquid 38 stored in the lower liquid space 22. When the particles 40 pass through the connection pore 26, the current value flowing through the first liquid 37 and the second liquid 38 changes. The change in current value can be observed using the current meter 36. By observing the change in the current value, characteristics (e.g., type, shape, and size) of the particles 40 that passed through the connection pore 26 can be analyzed. For example, it is possible to determine the number of particles 40 of a certain type contained in the first liquid 37. The particle analysis device 1 can be used to analyze a variety of particles, such as exosomes, pollens, viruses, and bacteria.

As shown in Figs. 1, 2, and 3, the particle analysis device 1 includes multiple stacked pentagonal plates 2, 4, 6, 8, and 10. Preferably, some or all of these plates are formed from transparent or semi-transparent material, and storage states of the first liquid 37 and the second liquid 38 in the cavities of the particle analysis device 1 (the first hole 20A, the second hole 20B, the third hole 22A, and the fourth hole 22B, and the liquid spaces 20 and 22) can be observed from outside the particle analysis device 1. However, it is not absolutely necessary that the storage states of the liquids are observable, and these plates may be opaque.

The plates 2, 4, 6, 8, and 10 are formed from electrically and chemically inert and insulating materials. Each plate may be formed from a rigid material or from an elastic material. Preferred rigid materials include resin materials, such as polycarbonate, polyethylene terephthalate, acrylic, cyclic olefin, polypropylene, polystyrene, polyester, and polyvinyl chloride. Preferred elastic materials include elastomers, for example, silicone rubber containing PDMS (polydimethylsiloxane) or urethane rubber.

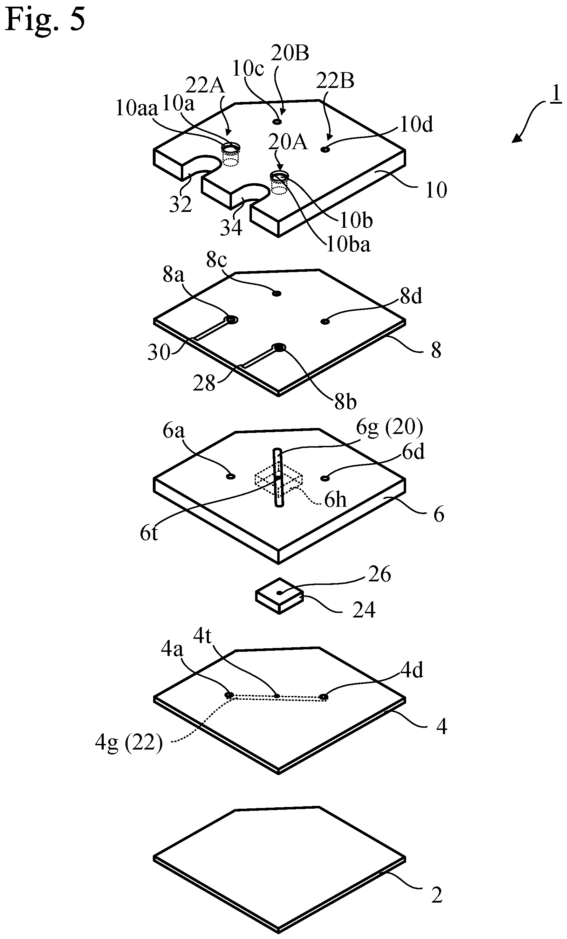

As shown in Figs. 2 and 5, neither grooves nor holes are formed in the lowermost plate 2. The plate 2 is formed, for example, from one of the preferred rigid materials described above.

A horizontal groove 4g is formed in the center of the lower surface of the next plate 4. When the plates 2 and 4 are joined together, the groove 4g forms the lower liquid space 22. In the center of the groove 4g, a communication hole 4t penetrating the plate 4 in a vertical direction is formed. The communication hole 4t connects the lower liquid space 22 (groove 4g) with the connection pore 26 of the chip 24. In addition, vertically penetrating cylindrical through-holes 4a and 4d are formed in the plate 4. The through-holes 4a and 4d have the same diameter. The through-hole 4a communicates with one end of the groove 4g, whereas the through-hole 4d communicates with the other end of the groove 4g. The plate 4 may be formed from one of the rigid materials described above, but is preferably formed from one of the elastic materials described above.

A recess 6h having a rectangular-parallelepiped shape is formed in the center of the lower surface of the next plate 6. The recess 6h contains the chip 24 having the connection pore 26. The chip 24 is fitted into the recess 6h. The chip 24 may be removable (replaceable) or non-removable (non-replaceable) from the recess 6h. A horizontal groove 6g is formed in the center of the upper surface of the plate 6. When the plates 6 and 8 are joined together, the groove 6g forms the upper liquid space 20. In the center of the groove 6g, a vertically penetrating communication hole 6t is formed. The communication hole 6t connects the upper liquid space 20 (the groove 6g) with the connection pore 26 of the chip 24. The cross sections of the communication holes 4t and 6t and the connecting pore 26 are circular, but they need not be circular.

The plate 6 has vertically penetrating cylindrical through-holes 6a and 6d. The through-holes 6a and 6d have the same diameter as that of the through-holes 4a and 4d. The through-hole 6a communicates with the through-hole 4a of the plate 4 immediately below it, and thus with one end of the groove 4g, whereas the through-hole 6d communicates with the through-hole 4d, and thus with the other end of the groove 4g. The plate 6 may be formed from one of the rigid materials described above, but is preferably formed from one of the elastic materials described above.

The chip 24 has a rectangular parallelepiped shape, for example, a square plate shape. In the center of the chip 24, the vertically penetrating connection pore 26 is formed. The chip 24 is made from an electrically and chemically inert and insulating material, such as glass, sapphire, a ceramic, a resin, an elastomer, SiO₂, SiN, or Al₂O₃. Preferably, the chip 24 is made from a material harder than the material of the plates 2, 4, 6, 8, and 10, for example, glass, sapphire, ceramics, SiO₂, SiN, or Al₂O₃, but a resin or an elastomer may be used to form the chip 24. The user may select an appropriate chip 24 depending on the application of the particle analysis device 1. For example, the user may prepare multiple chips 24 with connection pores 26 having different dimensions or shapes, and may select a chip 24 to be fitted into the recess to change the particles 40 to be analyzed.

In the next plate 8, cylindrical through-holes 8a, 8b, 8c, and 8d are formed. The through-holes 8a, 8b, 8c, and 8d have the same diameter as that of the through-holes 4a, 4d, 6a and 6d. The through-hole 8a communicates with the through-hole 6a of the plate 6 disposed immediately below it, whereas the through-hole 8d communicates with the through-hole 6d. The through-hole 8b communicates with one end of the groove 6g of the plate 6, whereas the through-hole 8c communicates with the other end of the groove 6g. On the upper surface of the plate 8, the electrodes 28 and 30 are arranged in parallel, and the first electrode 28 gives an electric potential to the first liquid 37 in the through-hole 8b, whereas the second electrode 30 gives another electric potential to the second liquid 38 in the through-hole 8a. The plate 8 may be formed from one of the rigid materials described above, but is preferably formed from one of the elastic materials described above.

In the uppermost plate 10, vertically penetrating through-holes 10a, 10b, 10c, and 10d are formed. The through-holes 10a, 10b, 10c, and 10d respectively communicate with the through-holes 8a, 8b, 8c, and 8d of the plate 8 immediately below them.

In addition, on one side surface of the uppermost plate 10, a first notch 31 exposing the first electrode 28 disposed below and a second notch 34 exposing the second electrode 30 are formed. The notches 32 and 34 have a horseshoe-shape, i.e., an inverted U-shape, but their shape is not limited to the embodiment shown. The plate 10 may be formed from one of the elastic materials described above, but is formed from one of the rigid materials described above.

The aforementioned first hole 20A is constituted of the through-holes 10b and 8B and penetrates the plates 10 and 8 to reach one end of the groove 6g in the plate 6, i.e., the upper liquid space 20. In the middle of the first hole 20A, the first electrode 28 is provided.

The second hole 20B is constituted of the through-holes 10c and 8c and penetrates the plates 10 and 8 to reach the other end of the groove 6g in the plate 6, i.e., the upper liquid space 20.

The third hole 22A is constituted of the through-holes 10a, 8a, 6a, and 4a and penetrates the plates 10, 8, 6, and 4 to reach one end of the groove 4g in the plate 4, i.e., the lower liquid space 22. The second electrode 30 is provided in the middle of the third hole 22A.

The fourth hole 22B is constituted of the through-holes 10d, 8d, 6d, and 4d and penetrates the plates 10, 8, 6, and 4 to reach the other end of the groove 4g in the plate 4, i.e., the lower liquid space 22.

The through-hole 10b in the uppermost plate 10 has a larger diameter portion 10ba at the upper portion thereof and a smaller diameter portion 10bb at the lower portion thereof. Both the larger diameter portion 10ba and the smaller diameter portion 10bb are cylindrical, but the diameter of the larger diameter portion 10ba is greater than that of the smaller diameter portion 10bb. The diameter of the smaller diameter portion 10bb is greater than that of the through-hole 8b immediately below the through-hole 10b. The larger diameter portion 10ba is an opening of the first hole 20a and opens at the top surface of the particle analysis device 1. Thus, the opening 10ba of the first hole 20a has a greater area than areas of other portions of the first hole 20A.

The through-hole 10a in the plate 10 has a larger diameter portion 10aa at the upper portion thereof and a smaller diameter portion 10ab at the lower portion thereof. Both the larger diameter portion 10aa and the smaller diameter portion 10ab are cylindrical, but the diameter of the larger diameter portion 10aa is greater than that of the smaller diameter portion 10ab. The diameter of the smaller diameter portion 10ab is greater than that of the through-hole 8a immediately below the through-hole 10a. The larger diameter portion 10aa is an opening of the third hole 22a and opens at the top surface of the particle analysis device 1. Thus, the opening 10aa of the third hole 22A has a greater area than areas of other portions of the third hole 22A.

The through-holes 10c and 10d of the plate 10 are cylindrical in shape having a uniform diameter. The through-holes 10c and 10d have the same diameter as that of the through-holes 8a, 8b, 8c, and 8d of the plate 8. The through-hole 10c is an opening of the second hole 20B and opens at the top surface of the particle analysis device 1. The through-hole 10d is an opening of the fourth hole 22B and opens on the top surface of the particle analysis device 1.

The portion of the first hole 20A other than the opening 10aa has an area greater than that of the second hole 20B, and the portion of the third hole 22A other than the opening 10ba has an area greater than that of the fourth hole 22B.

These plates 2, 4, 6, 8, and 10 can be bonded together with an adhesive. However, in order to prevent or reduce undesirable inflow of organic matter into the liquid spaces 20 and 22, it is preferable to use irradiation of vacuum ultraviolet light or oxygen plasma to join the plates 2, 4, 6, 8, and 10. When joining the plates 2, 4, 6, 8, and 10, it is preferable that the plates 2, 4, 6, 8, and 10 be compressed in a vertical direction, so that leakage of liquid from the holes 20A, 20B, 22A, and 22B and the liquid spaces 20 and 22 is prevented as far as possible after joining.

When the chip 24 is formed from a brittle material, at least one of the plates 4 and 6 around the chip 24 is preferably formed from one of the above-described elastic materials in order to prevent the chip 24 from being damaged. In addition, in order to prevent leakage of liquid in the connection pore 26 of the chip 24, the plate 6, into which the chip 24 is fitted, is preferably formed from one of the above-described elastic materials, and the recess 6h of the plate 6 preferably has dimensions (horizontal dimensions) suitable for the chip 24 to be tightly fitted. Furthermore, in order to prevent a gap from occurring between the lower surface of the chip 24 and the upper surface of the plate 4, the depth of the recess 6h is preferably the same as or slightly greater than the height of the chip 24.

The electrodes 28 and 30 are formed from materials with high electrical conductivity. For example, silver-silver chloride (Ag/AgCI), platinum, or gold can be used to form the electrodes 28 and 30. Alternatively, the electrodes 28 and 30 can be formed from a material containing any or all of these metals and an elastomer.

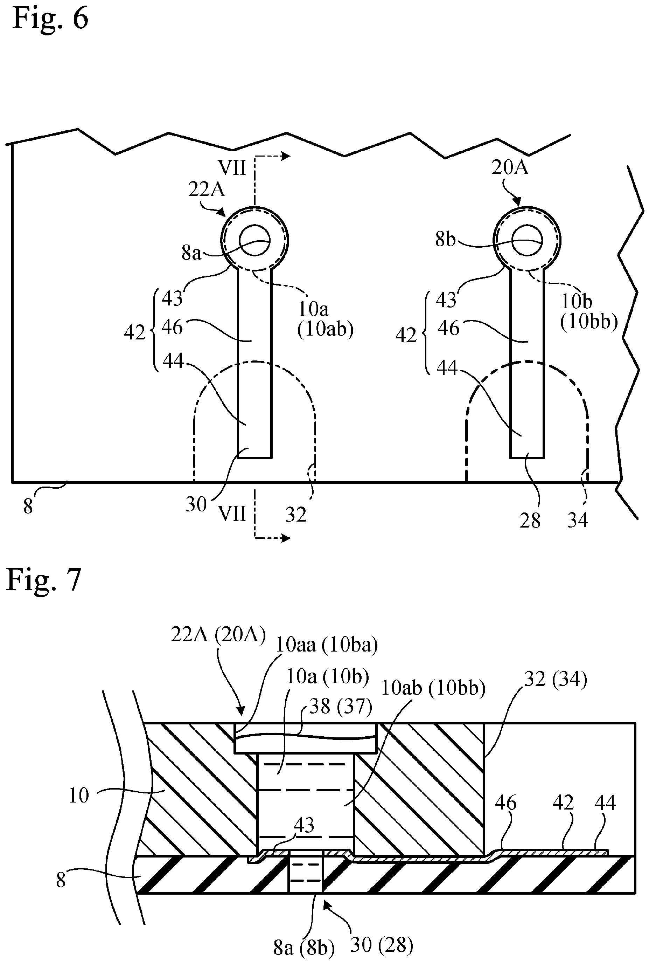

As shown in Figs. 6 and 7, each of the electrodes 28 and 30 formed on the plate 8 has a flat portion 42 formed around the through-hole 8b or 8a (a part of the first hole 20A or the third hole 22A).

The flat portion 42 of each electrode intersects the first hole 20A or the third hole 22A at a right angle. The flat portion 42 has a circular annular overlapping portion 43, a rectangular exposed portion 44, and a long connection portion 46. The overlapping portion 43 is formed approximately concentrically with the through-hole 8b or 8a and overlaps approximately concentrically with the through-hole 10b or 10a disposed immediately above it. In Fig. 6, the smaller diameter portions 10ab and 10bb of the through-holes 10a and 10b are shown by phantom lines.

The exposed portion 44 overlaps the notch 34 or 32 of the plate 10 disposed immediately above it. In Fig. 6, the notches 34 and 32 are shown in phantom lines.

The connection portion 46 connects the overlapping portion 43 with the exposed portion 44. The width of the connection portion 46 is less than the outer diameter of the overlapping portion 43. In this embodiment, the width of the connection portion 46 is equal to the width of the exposed portion 44, but may be less than the width of the exposed portion 44.

The first hole 20A has the through-hole 10b, which is an upper portion thereof above the flat portion 42 of the first electrode 28, and the through-hole 8b, which is a lower portion thereof below the flat portion 42 of the first electrode 28. As described above, the smaller diameter portion 10bb of the through-hole 10b has a larger diameter and thus a greater area than those of the through-hole 8b. The outer diameter of the overlapping portion 43 of the flat portion 42 of the first electrode 28 is greater than that of the smaller diameter portion 10bb of the through-hole 10b disposed immediately above it.

The third hole 22A has the through-hole 10a, which is an upper portion thereof above the flat portion 42 of the second electrode 30, and the through-hole 8a, which is a lower portion thereof below the flat portion 42 of the second electrode 30. As described above, the smaller diameter portion 10ab of the through-hole 10a has a larger diameter and thus a greater area than those of the through-hole 8a. The outer diameter of the overlapping portion 43 of the flat portion 42 of the second electrode 30 is greater than that of the smaller diameter portion 10ab of the through-hole 10a disposed immediately above it.

Thus, the overlapping portion 43 of the flat portion 42 of each electrode overlaps the through-hole 10b or 10a having an opening area greater than that of the through-hole 8b or 8a. Therefore, the contact area between the liquid injected into the holes and the electrodes is secured to be large, and the reliability of analysis of the particles can be improved. As shown in Fig. 7, the second electrode 30 is in contact with the second liquid 38 inside the third hole 22A (through-holes 10A and 8A) with a large contact area, and the first electrode 28 is in contact with the first liquid 37 inside the first hole 20A (through-holes 10b and 8b) with a large contact area.

In addition, since the outer diameter of the overlapping portion 43 is greater than that of the smaller diameter portions 10bb and 10ab of the through-holes 10b and 10a immediately above the overlapping portion 43, so that even when the position of the overlapping portion 43 deviates slightly from the desired position (i.e., even when the accuracy of the position of the overlapping portion 43 is incorrect, the overlapping portion 43 overlaps the through-hole 10b or 10a with a high degree of reliability. Accordingly, in a plurality of particle analysis devices 1, the contact area of the liquid injected into the holes and the electrodes is uniform, and the reliability of the particle analysis can be improved.

When supplying the first liquid 37 to the upper liquid space 20, the opening of either of the first hole 20A and the second hole 20B, through which the first liquid 37 can flow, is used for an inlet for the first liquid 37, and the other opening is used for an outlet for air pushed out by the first liquid 37. In this embodiment, the opening of the second hole 20B (the through-hole 10c) is used for an inlet for the first liquid 37, and the opening of the first hole 20A (the larger diameter portion 10ba of the through-hole 10b) is used for an outlet for air pushed out by the first liquid 37.

On the other hand, when supplying the second liquid 38 to the lower liquid space 22, the opening of either of the third hole 22A and the fourth hole 22B, through which the second liquid 38 can flow, is used for an inlet for the second liquid 38, and the other opening is used for an outlet for air pushed out by the second liquid 38. In this embodiment, the opening of the fourth hole 22B (the through-hole 10d) is used for an inlet for the second liquid 38, and the opening of the third hole 22A (the larger diameter portion 10aa of the through-hole 10a) is used for an outlet for air pushed out by the second liquid 38.

In order to perform an accurate analysis, it is preferable that the first liquid 37 and second liquid 38 do not overflow from the air outlets (the openings 10ba and 10aa) and do not come into contact with each other on the top surface of the particle analysis device 1. In this embodiment, the opening of the first hole 20A (the larger diameter portion 10ba of the through-hole 10b) has an area that is greater than other portions (the rest) of the first hole 20A, so that when the opening 10ba having a greater area is used for the air outlet, the first liquid 37 can be prevented from overflowing from the air outlet. In addition, the opening of the third hole 22A (the larger diameter portion 10aa of the through-hole 10a) has an area that is greater than other portions (the rest) of the third hole 22a, so that when the opening 10aa having a greater area is used for the air outlet, the second liquid 38 can be prevented from overflowing from the air outlet. Therefore, it is possible to prevent the two used liquids 37 and 38 from contacting at a point other than the desired connection pore 26, through which the particles pass.

In particular, according to this embodiment, an electric potential can be applied to the first liquid 37 through the first hole 20 having an area greater than that of the second hole 20B and another electric potential can be applied to the first liquid 37 through the third hole 22A having an area greater than that of the fourth hole 22B. Therefore, it is possible to reliably apply electric potentials to the two liquids, thereby improving the reliability of the analysis of the particles. Furthermore, since the opening 10aa having a greater area is provided in the first hole 20a that has a greater area, when the opening 10aa is used for the air outlet, the first liquid 37 can be effectively prevented from overflowing from the air outlet. In addition, since the opening 10ba having a greater area is provided in the third hole 22a that has a greater area, when the opening 10ba is used for the air outlet, the second liquid 38 can be effectively prevented from overflowing from the air outlet.

In addition, in this embodiment, the particle analysis device 1 has a pentagonal contour with one corner of an approximately square being cut out. Accordingly, in using the particle analysis device 1, the orientation of the particle analysis device 1 can be easily and accurately recognized by the user.

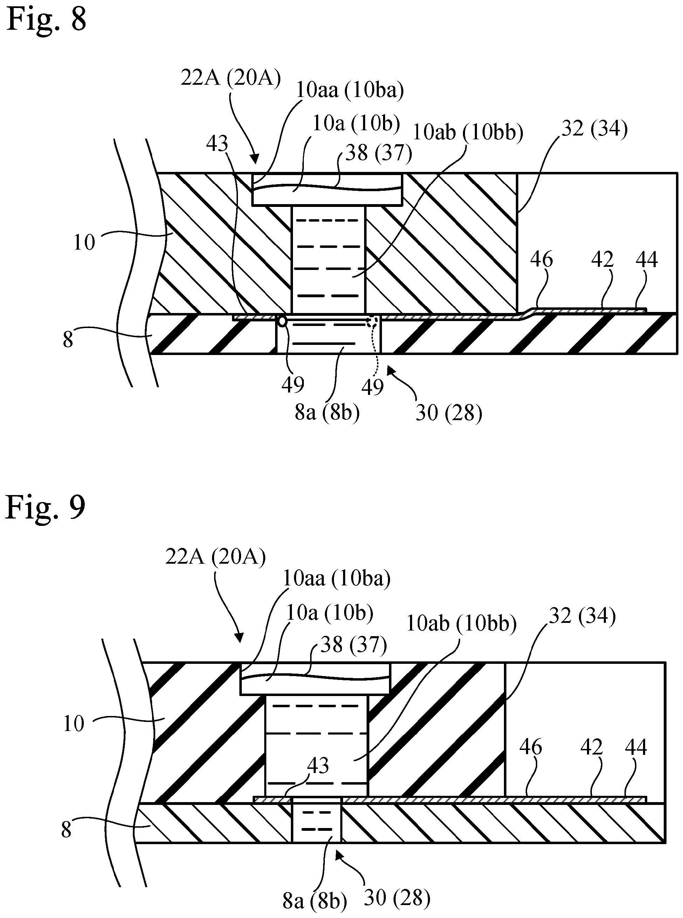

Fig. 8 is an enlarged cross-sectional view of the plate 8 of a comparative example and the plate 10 above it, showing in the same manner as in Fig. 7, and corresponds to a cross-sectional view taken along line VII-VII. Contrary to the embodiment, in this comparative example, the smaller diameter portions 10bb and 10ab of the upper through-holes 10b and 10a have a smaller diameter and thus a smaller area than those of the lower through-holes 8a and 8b. In this case, the overlapping portion 43 of each electrode, which is concentric to the through-holes 8a and 10a or 8b and 10b, does not overlap the smaller diameter portion 10ab or 10bb of the upper through-hole 10a or 10b, so that each electrode contacts the first liquid 37 or the second liquid 38 only at the edge of the hole of the overlapping portion 43. Therefore, the contact area between the electrodes and the liquid is small. In addition, the smaller diameter portions 10b and 10a of the upper through-holes 10bb and 10ab are smaller in diameter than the lower through-holes 8a and 8b, so that after injecting the first liquid 37 and the second liquid 38 into the holes 22A and 20A, there is a possibility that air bubbles 49 remain in the upper corners of the holes 8A and 8B. Such air bubbles 49 further reduce the contact area between the electrode and the liquid. Even if the diameter of the smaller diameter portions 10bb and 10ab of the upper through-holes 10b and 10a is the same as that of the lower through-holes 8a and 8b, these disadvantages may occur. This embodiment eliminates these disadvantages that may occur in the comparative example shown in Fig. 8.

In this embodiment, the plate 8, on which the electrodes 28 and 30 are formed, is preferably formed from an elastic material. Since the flat portion 42 of each of the first electrode 28 and the second electrode 30 is placed on the upper surface of the plate 8, formed from an elastic material, when the flat portion 42 receives an upper load of the uppermost plate 10, the plate 8 immediately below the flat portion 42 deforms elastically, as shown in Fig. 7. Each electrode is adjacent to the hole 20A or 22A, into which the liquid is injected, but the plate 8 deforms elastically and the overlapping portion 43 of the flat portion 42 also deforms elastically. Accordingly, even in a case in which the thickness of the overlapping portion 43 of the flat portion 42 is large, there is little risk of leakage of liquid between the plate 8 and the plate 10 above the plate 8.

Instead of or in addition to this, the plate 10 immediately above the plate 8 may be formed of an elastic material. In this case, as shown in Fig. 9, when the flat portion 42 receives an upper load, the plate 10 immediately above the flat portion 42 is deforms elastically. Accordingly, even in a case in which the thickness of the overlapping portion 43 of the flat portion 42 is large, there is little risk of leakage of liquid between the plate 8 and the plate 10.

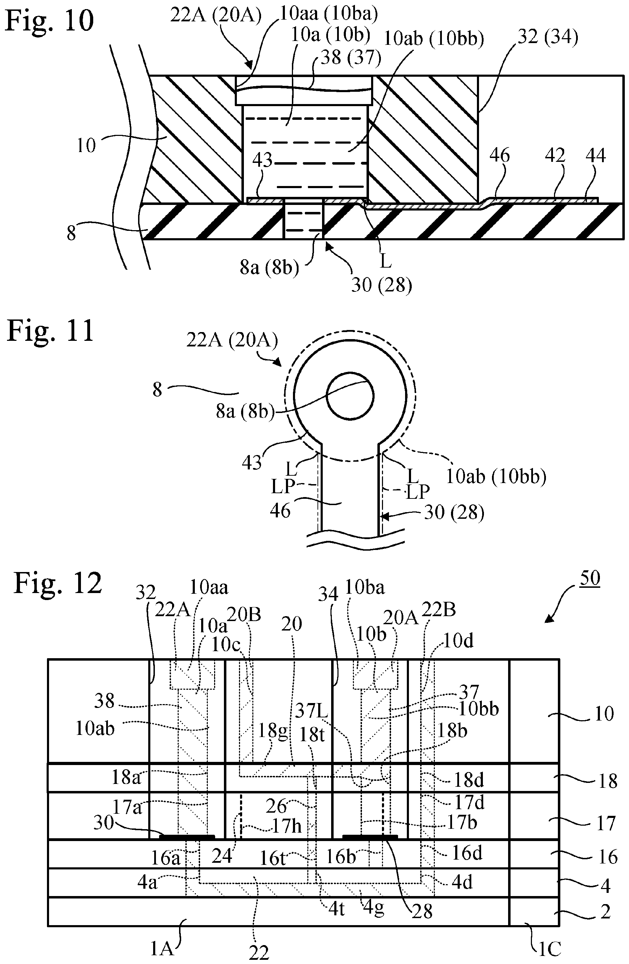

Fig. 10 is an enlarged cross-sectional view of the plate 8 of a modification of the first embodiment and the plate 10 above it, showing in the same manner as in Fig. 7, and corresponds to a cross-sectional view taken along line VII-VII. Fig. 11 is an enlarged plan view of plate 8. In a manner similar to the embodiment, in this comparative example, the smaller diameter portions 10bb and 10ab of the upper through-holes 10b and 10a have a larger diameter and thus a greater area than those of the lower through-holes 8a and 8b. The modification shown in Fig. 10 can eliminate the disadvantages that may arise in the comparative example of Fig. 8. Even when the accuracy of the position of the overlapping portion 43 is incorrect, the overlapping portion 43 overlaps the smaller diameter portion 10bb or 10ab of the through-hole 10b or 10a with a high degree of reliability.

However, in the modification shown in Figs. 10 and 11, the overlapping portion 43 of the flat portion 42 of the electrode has an outer diameter that is smaller than that of the smaller diameter portion 10bb and 10ab of the through-holes 10b and 10a immediately above it. As a result, the contour of each of the smaller diameter portions 10bb and 10ab of the through-holes 10b and 10a overlaps both the electrode and the portion without the electrode, and therefore, the lower edge of each of the smaller diameter portions 10bb and 10ab of the through-holes 10b and 10a has a step. Because of the step, a gap may occur between the plates 8 and 10 at points L at which both edges of the connection portions 46 of the flat portions 42 of the electrode intersect the contour of the smaller diameter portion 10bb or 10ab of the through-hole 10b and 10a. Therefore, the liquid in the hole 22A or 20A may likely flow out from the points L through outflow paths LP at both edges of the connection portion 46 and also through both edges of the exposed portion 44. In Fig. 11, the outflow paths LP for the liquid are indicated by dashed lines.

However, it is possible to prevent leakage of the liquid by compressing the particle analysis device 1 in a vertical direction to eliminate the gap at the points L. Therefore, this modification may be used with, for example, a compression mechanism (not shown) that always compresses the particle analysis device 1 in a vertical direction. Such a compression mechanism may be, for example, a clamping mechanism, one or more screws, or a pinch. Alternatively, the plates 8 and 10 may be plastically deformed to prevent the occurrence of a gap between the plates 8, 10 at the points L.

On the other hand, according to the first embodiment, as shown in Figs. 6 and 7, the outer diameter of the overlapping portion 43 of the flat portion 42 of the electrode is greater than that of the smaller diameter portions 10bb and 10ab of the through-holes 10b and 10a immediately above the flat portion 42. Therefore, the contour of each of the through-holes 10b and 10a overlaps only with the overlapping portion 43 of the electrode. Therefore, the lower ends of each of the through-holes 10b and 10a are sealed at the overlapping portion 43 on the same plane. In this case, without the above-described compression mechanism or plastic deformation of the plates 8 and 10, the outflow of the liquid in the holes 22A or 20A can be prevented.

As shown in Figs. 1, 2, and 3, in the uppermost plate 10, the first notch 32, at which the flat portion 42 (in particular the entirety of the exposed portion 44) of the first electrode 28 is exposed, and the second notch 34, at which the flat portion 42 (in particular the entirety of the exposed portion 44) of the second electrode 30 is exposed, are formed. Since the notches 32 and 34 are thus provided in which the flat portions 42 of the electrodes are exposed, access to the electrodes 28 and 30 by the user (e.g., access for components connecting the electrodes to the current meter 36, etc.) is easy, and the electrodes 28 and 30 are easily connected to a power supply (DC power supply 35, see Fig. 4).

As shown in Figs. 2 and 5, the first electrode 28 that supplies an electric potential to the upper liquid space 20 is disposed above the connection pore 26 that connects the upper liquid space 20 and the lower liquid space 22. This effect will now be described.

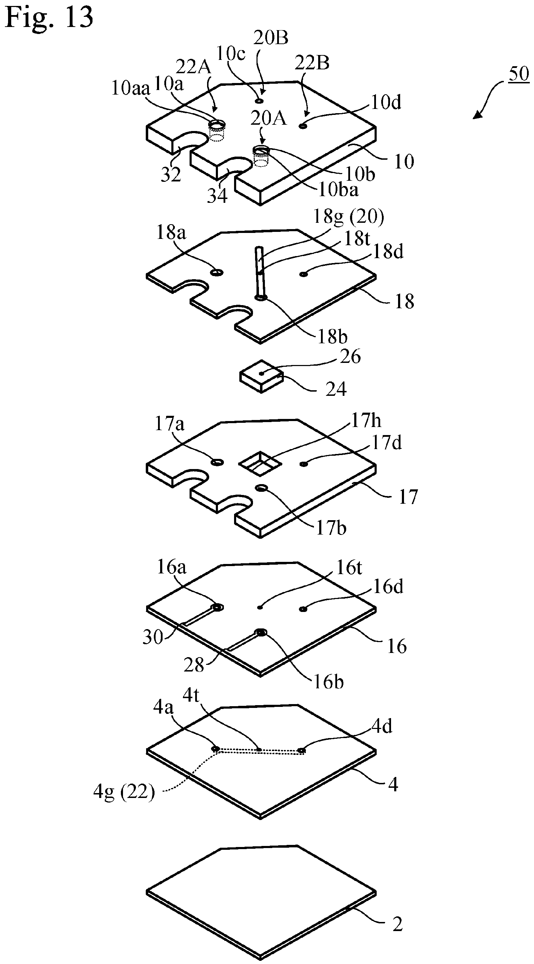

Fig. 12 shows a particle analysis device 50 according to a comparative example in which the first electrode 28 is disposed below the connection pore 26, contrary to the embodiment. Fig. 13 is an exploded view of the particle analysis device 50 of Fig. 12. This particle analysis device 50 has plates 16, 17, 18 instead of the plates 6 and 8. The groove 4g of the plate 4 is used as the lower liquid space 22.

A vertically penetrating through-hole 16t is formed in the center of the next plate 16. The through-hole 16t communicates with the communication hole 4t of the plate 4 immediately below it and thus with the center of the groove 4g. Vertically penetrating through-holes 16a, 16b, and 16d are formed in the plate 16. The through-hole 16a communicates with the through-hole 4a and thus with one end of the groove 4g, whereas the through-hole 16d communicates with the through-hole 4d and thus with the other end of the groove 4g. On the upper surface of the plate 16, electrodes 28 and 30 are arranged in parallel, and the first electrode 28 gives an electric potential to the first liquid 37 in the through-hole 16b, whereas the second electrode 30 gives another electric potential to the second liquid 38 in the through-hole 16a.

In the center of the next plate 17, a penetrating recess 17h is formed. The recess 17h contains the chip 24 having the connection pore 26. The connection pore 26 of the chip 24 communicates with the through-hole 16t of the plate 16 immediately below it and is connected to the groove 4g of the plate 4 via the through-holes 16t and 4t. In addition, vertically penetrating through-holes 17a, 17b, and 17d are formed in the plate 17. The through-holes 17a, 17b and 17d communicate with the through-holes 16a, 16b, and 16d of the plate 16 immediately below them, respectively.

A horizontal groove 18g is formed on the upper surface in the center of the next plate 18. When the plates 18 and 10 are joined together, the groove 18g forms the upper liquid space 20. In the center of the groove 18g, a vertically penetrating communication hole 18t is formed. The communication hole 18t connects the upper liquid space 20 (groove 18g) with the connection pore 26 of the chip 24. Therefore, the upper liquid space 20 is connected to the lower liquid space 22 via the through-holes 18t, the connection pore 26, and the through-holes 16t and 4t. The cross-sections of the communication hole 18t, the connection pore 26, and the through-holes 16t and 4t are circular, but need not be circular.

Vertically penetrating through-holes 18a, 18b, and 18d are formed in the plate 18. The through-holes 18a, 18b, and 18d communicate with the through-holes 17a, 17b and 17d of the plate 17 immediately below them, respectively, and communicate with the through-holes 10a, 10b, and 10d of the uppermost plate 10 immediately above them, respectively.

One end of the groove 18g of the plate 18 communicates with the through-hole 10b of the uppermost plate 10 immediately above it, whereas the other end communicates with the through-hole 10c. Furthermore, the end communicating with the through-hole 10b communicates with the through-hole 18b.

The first hole 20A is constituted of the through-holes 10b, 18b, 17b, and 16b, and penetrates the plates 10, 18, 17, and 16. At a lower part of the first hole 20A, a first electrode 28 is provided. In addition, the middle of the first hole 20A is connected with one end of the groove 18g of the plate 18, i.e., the upper liquid space 20. The first electrode 28 is arranged below the upper liquid space 20. The second hole 20B is constituted of the through-hole 10c and penetrates the plate 10 to reach the other end of the groove 18g of the plate 18, i.e., the upper liquid space 20.

In the particle analysis device 50 of this comparative example, through-holes 17b, 18b, and 16b are formed for the first electrode 28 disposed below the upper liquid space 20. The first hole 20A, which are provided for the purpose of injecting the first liquid 37 into the upper liquid space 20, extends from the top surface of the particle analysis device 50 to the upper liquid space 20 and further down to reach the first electrode 28.

The third hole 22A is constituted of the through-holes 10A, 18A, 17A, 16A, and 4A and penetrates the plates 10, 18, 17, 16, and 4 to reach one end of the groove 4g of the plate 4, i.e., the lower liquid space 22. The second electrode 30 is provided at a lower part of the third hole 22A. The fourth hole 22B is constituted of the through-hole 10d, 18d, 17d, 16d, and 4d, and penetrates the plates 10, 18, 17, 16, and 4 to reach the other end of the groove 4g of plate 4, i.e., the lower liquid space 22.

In the particle analysis device 50, the through-holes 10a, 10b, 18a, 18b, 17a, and 17b above the electrodes 28 and 30 have a greater diameter than that of the lower through-holes 16a and 16b. In addition, in order to facilitate access by the user to the electrodes 28 and 30 (e.g., access for components that connect the electrodes to the current meter 36, etc.), notches are formed in the plates 17 and 18 above the electrodes 28 and 30 at locations that coincide with the notches 32 and 34 in the uppermost plate 10, in which the notches have the same shape as that of the notches 32 and 34.

However, in the particle analysis device 50, the first electrode 28 is below the upper liquid space 20. In this case, when the first liquid 37 is injected into the first hole 20A, there is likelihood that the first liquid 37 does not reach the first electrode 28 disposed at a lower part due to the interfacial tension of the liquid to the inner surface of the first hole 20A, so that the first electrode 28 may not be able to give an electric potential to the first liquid 37. In Fig. 12, the lower boundary surface 37L of the first liquid 37 in the first hole 20A in this case is shown. The first liquid 37 stays in the middle of the through-hole 18b of the plate 18 and does not reach the lower through-holes 17b and 16b, so as not to reach the first electrode 28.

In contrast, in the first embodiment, the first electrode 28, which provides an electric potential to the liquid in the upper liquid space 20 through the first hole 20A, is disposed above the upper liquid space 20. Therefore, it is easy for the liquid to reach the first electrode 28 through the first hole 20A, and the first electrode 28 can reliably give an electric potential to the liquid in the upper liquid space 20. On the other hand, the second electrode 30 applies an electric potential to the lower liquid space 22 below the connection pore 26 through the third hole 22A extending to the lower liquid space 22, so that the electric potential can be reliably applied to the liquid in the lower liquid space 22. Thus, it is possible to improve the reliability of the analysis of the particles.

The first electrode 28 and the second electrode 30 are disposed at the same height. Therefore, connection of a power supply (DC power supply 35, see Fig. 4) to these electrodes 30 and 28 is easy.

### Second Embodiment

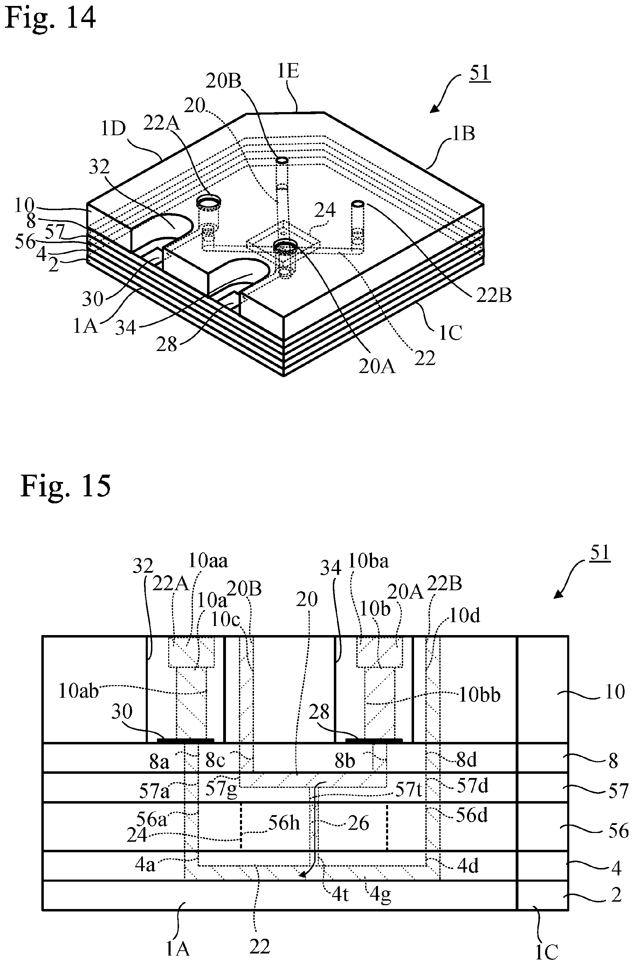

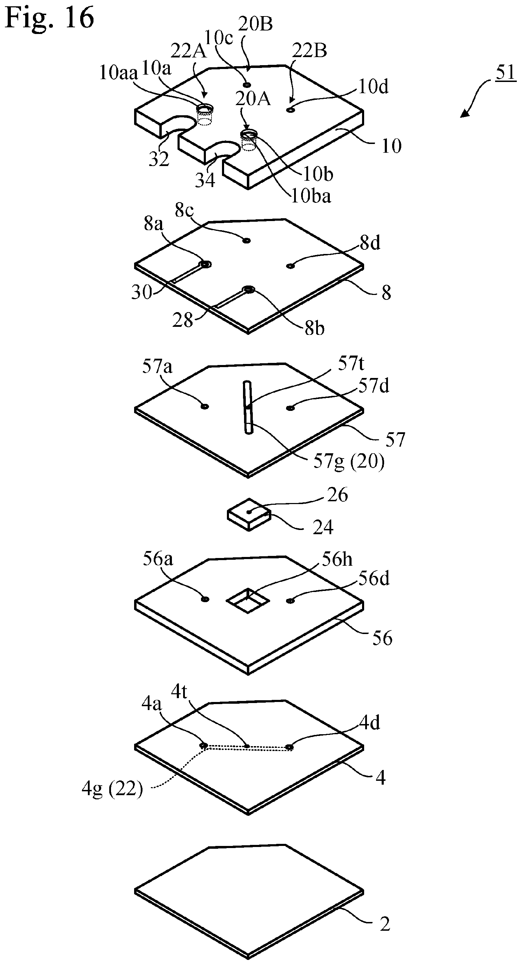

With reference to Figs. 14 to 16, a second embodiment of the present invention will be described. In Fig. 14 and subsequent drawings, the same reference symbols are used for identifying components that have been described, and such components will not be described in detail.

The particle analysis device 51 according to the second embodiment has plates 56 and 57 instead of the plate 6. The groove 4g of the plate 4 is used as the lower liquid space 22. The lowermost plate 2 is not absolutely necessary.

A vertically penetrating recess 56h having a rectangular parallelepiped shape is formed in the center of the plate 56. The recess 56h contains the chip 24 having the connection pore 26. The chip 24 is fitted into the recess 56h. The chip 24 may be removable (replaceable) or non-removable (non-replaceable) from the recess 56h. The connecting pore 26 of the chip 24 is connected to the communication hole 4t of the plate 4 immediately below the chip 24 and thus to the center of the groove 4g. In addition, vertically penetrating cylindrical through-holes 56a and 56d are formed in the plate 56. The through-holes 56a and 56d have the same diameter as that of the through-holes 4a and 4d. The through-hole 56a communicates with the through-hole 4a and thus to one end of the groove 4g, whereas the through-hole 56d communicates with the through-hole 4d and thus to the other end of the groove 4g. The plate 56 may be formed from one of the rigid materials described above, but is preferably formed from one of the elastic materials described above.

A horizontal groove 57g is formed on the upper surface in the center of the next plate 57. When the plates 57 and 8 are joined together, the groove 57g forms an upper liquid space 20. In the center of the groove 57g, a vertically penetrating communication hole 57t is formed. The communication hole 57t connects the upper liquid space 20 (the groove 57g) with the connection pore 26 of the chip 24. Therefore, the upper liquid space 20 is connected to the lower liquid space 20 via the communication hole 57t, the connecting pore 26, and the communication hole 4t. The cross-sections of the communication holes 57t and 4t and the connecting pore 26 are circular, but they need not be circular.

In the plate 57, vertically penetrating cylindrical through-holes 57a and 57d are formed. The through-holes 57a and 57d communicate with the through-holes 56a and 56d of the plate 56 immediately below them, respectively. The through-holes 56a, 56d, 57a, and 57d have the same diameter as that of the through-holes 4a, 4d, 56a and 56d and the through-holes 8a, 8b, 8c, and 8d of the plate 8. The plate 57 may be formed from one of the rigid materials described above, but is preferably formed from one of the elastic materials described above.

The through-hole 8a of the plate 8 communicates with the through-hole 57a of the plate 57 immediately below it, and the through-hole 8d communicates with the through-hole 57d of the plate 57. The through-hole 8b communicates with one end of the groove 57g of the plate 57, whereas the through-hole 8c communicates with the other end of the groove 57g.

The first hole 20A is constituted of the through-holes 10b and 8b and penetrates the plates 10 and 8 to reach one end of the groove 57g in the plate 57, i.e., the upper liquid space 20. In the middle of the first hole 20A, the first electrode 28 is provided. The second hole 20B is constituted of the through-holes 10c and 8c and penetrates the plates 10 and 8 to reach the other end of the groove 57g of the plate 57, i.e., the upper liquid space 20.

The third hole 22A is constituted of the through-holes 10a, 8a, 57a, 56a, and 4a, and penetrates the plate 10, 8, 57, 56, and 4 to reach one end of the groove 4g in the plate 4, i.e., the lower liquid space 22. The second electrode 30 is provided in the middle of the third hole 22A. The fourth hole 22B is constituted of the through-holes 10d, 8d, 57d, 56d, and 4d, and penetrates the plates 10, 8, 57, 56, and 4 to reach the other end of the groove 4g in the plate 4, i.e., the lower liquid space 22.

These plates 2, 4, 56, 57, 8, and 10 can be bonded together with an adhesive. However, in order to prevent or reduce undesirable inflow of organic matter into the liquid spaces 20 and 22, it is preferable to use irradiation of vacuum ultraviolet light or oxygen plasma to join the plates 2, 4, 56, 57, 8, and 10. When joining the plates 2, 4, 56, 57, 8, and 10, it is preferable that the plates 2, 4, 56, 57, 8, and 10 be compressed in a vertical direction, so that leakage of liquid from the holes 20A, 20B, 22A, and 22B and the liquid spaces 20 and 22 is prevented as far as possible after joining.

When the chip 24 is formed from a brittle material, at least one of the plates 4, 56, and 57 around the chip 24 is preferably formed from one of the above-described elastic materials in order to prevent the chip 24 from being damaged. In addition, in order to prevent leakage of liquid in the connection pore 26 of the chip 24, the plate 56, into which the chip 24 is fitted, is preferably formed from one of the above-described elastic materials, and the recess 56h of the plate 56 preferably has dimensions (horizontal dimensions) suitable for the chip 24 to be tightly fitted. Furthermore, in order to prevent gaps from occurring between the lower surface of the chip 24 and the upper surface of the plate 4 and between the upper surface of the chip 24 and the lower surface of the plate 57, the depth of the recess 56h (thickness of the plate 56) is preferably the same as or slightly greater than the height of the chip 24.

The other features are the same as the those of the first embodiment. This embodiment can achieve the same advantages as in the first embodiment described above. The modifications shown in Figs. 9, 10, and 11 according to the first embodiment are also applicable to this embodiment.

In this embodiment, the particle analysis device 51 has 2, 4, 56, 57, 8, and 10, which are one more than the plates 2, 4, 6, 8, and 10 of the particle analysis device 1 of the first embodiment. In other words, in the first embodiment, the intermediate plate 6, which is one of the plates, has the recess 6h for the chip 24 and the upper liquid space 20 (groove 6g), so that the number of plates can be reduced compared to the second embodiment. The plate 6 of the first embodiment can be considered as an integral combination of the plates 56 and 57 of the second embodiment.

### Third Embodiment

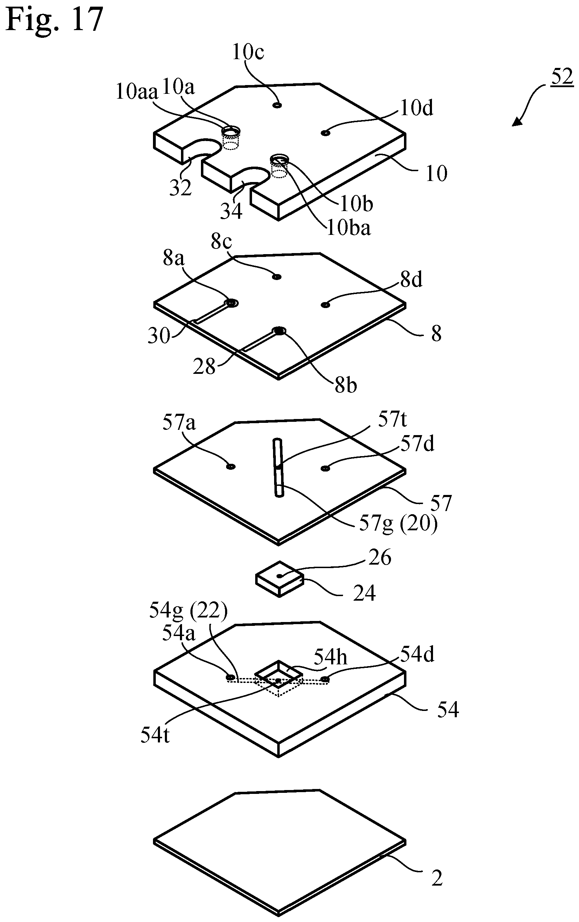

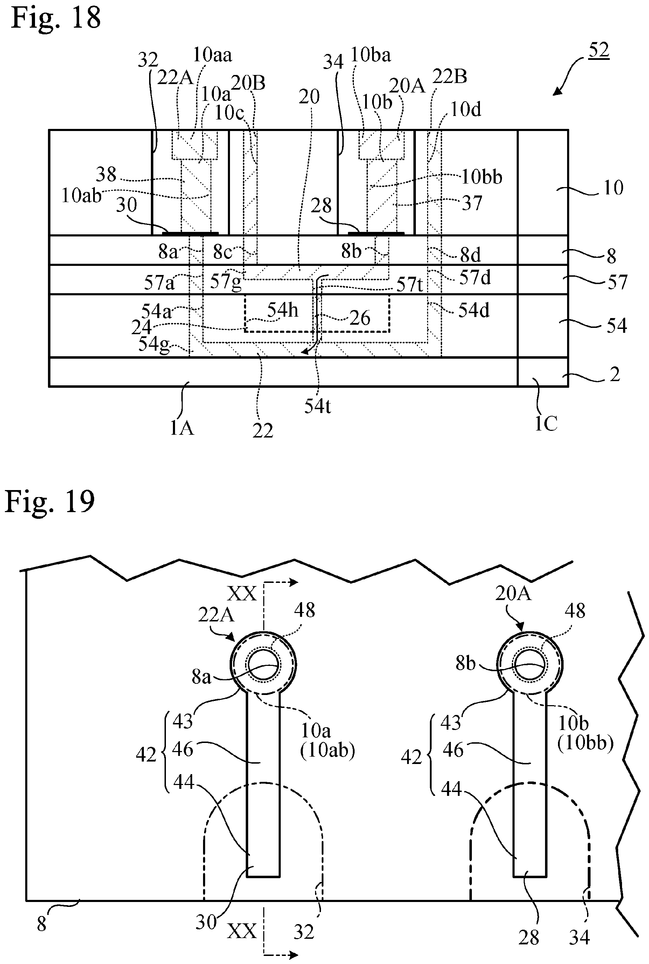

With reference to Figs. 17 and 18, a third embodiment of the present invention will be described. The particle analysis device 52 of the third embodiment has plates 54 and 57 instead of the plate 6. The plate 57 is the same as the plate 57 of the second embodiment.

A horizontal groove 54g is formed in the center of the lower surface of the plate 54. When the plates 2 and 54 are joined together, the groove 54g forms the lower liquid space 22.

A recess 54h having a rectangular parallelepiped shape is formed in the center of upper surface of the plate 54. The recess 54h contains the chip 24 having the connection pore 26. The chip 24 is fitted into the recess 54h. The chip 24 may be removable (replaceable) or non-removable (non-replaceable) from the recess 54h. The recess 54h overlaps the groove 54g on the lower surface of the plate 54, and a vertically penetrating communication hole 54t is formed at the center of the recess 54h. The communication hole 54t connects the recess 54h and the groove 54g, so that the connecting pore 26 of the chip 24 is connected to the center of the groove 54g through the communication hole 54t.

Vertically penetrating cylindrical through-holes 54a and 54d are formed in the plate 54. The through-hole 54a communicates with one end of the groove 54g on the lower surface of the plate 54, whereas the through-hole 54d communicates with the other end of the groove 54g. The plate 54 may be formed from one of the rigid materials described above, but is preferably formed from one of the elastic materials described above.

A horizontal groove 57g is formed on the upper surface in the center of the next plate 57. When the plates 57 and 8 are joined together, the groove 57g forms an upper liquid space 20. In the center of the groove 57g, a vertically penetrating communication hole 57t is formed. The communication hole 57t connects the upper liquid space 20 (the groove 57g) with the connection pore 26 of the chip 24. Therefore, the upper liquid space 20 is connected to the lower liquid space 20 via the communication hole 57t, the connecting pore 26, and the communication hole 54t. The cross-sections of the communication holes 57t, the connecting pore 26, and the communication hole 54t are circular, but they need not be circular.

In the plate 57, vertically penetrating cylindrical through-holes 57a and 57d are formed. The through-holes 57a and 57d communicate with the through-holes 54a and 54d of the plate 54 immediately below them, respectively. The through-holes 54a, 54d, 57a, and 57d have the same diameter as that of the through-holes 8a, 8b, 8c, and 8d of the plate 8. The plate 57 may be formed from one of the rigid materials described above, but is preferably formed from one of the elastic materials described above.

The through-hole 8a of the plate 8 communicates with the through-hole 57a of the plate 57 immediately below it, and the through-hole 8d communicates with the through-hole 57d of the plate 57. The through-hole 8b communicates with one end of the groove 57g of the plate 57, whereas the through-hole 8c communicates with the other end of the groove 57g.

The first hole 20A is constituted of the through-holes 10b and 8b and penetrates the plates 10 and 8 to reach one end of the groove 57g in the plate 57, i.e., the upper liquid space 20. In the middle of the first hole 20A, the first electrode 28 is provided. The second hole 20B is constituted of the through-holes 10c and 8c and penetrates the plates 10 and 8 to reach the other end of the groove 57g of the plate 57, i.e., the upper liquid space 20.

The third hole 22A is constituted of the through-holes 10a, 8a, 57a, 56a, and 54a, and penetrates the plate 10, 8, 57, 56, and 54 to reach one end of the groove 54g in the plate 54, i.e., the lower liquid space 22. The second electrode 30 is provided in the middle of the third hole 22A. The fourth hole 22B is constituted of the through-holes 10d, 8d, 57d, 56d, and 54d, and penetrates the plates 10, 8, 57, 56, and 54 to reach the other end of the groove 54g in the plate 54, i.e., the lower liquid space 22.

These plates 2, 54, 57, 8, and 10 can be bonded together with an adhesive. However, in order to prevent or reduce undesirable inflow of organic matter into the liquid spaces 20 and 22, it is preferable to use irradiation of vacuum ultraviolet light or oxygen plasma to join the plates 2, 54, 57, 8, and 10. When joining the plates 2, 54, 57, 8, and 10, it is preferable that the plates 2, 54, 57, 8, and 10 be compressed in a vertical direction, so that leakage of liquid from the holes 20A, 20B, 22A, and 22B and the liquid spaces 20 and 22 is prevented as far as possible after joining.

When the chip 24 is formed from a brittle material, at least one of the plates 54 and 57 around the chip 24 is preferably formed from one of the above-described elastic materials in order to prevent the chip 24 from being damaged. In addition, in order to prevent leakage of liquid in the connection pore 26 of the chip 24, the plate 54, into which the chip 24 is fitted, is preferably formed from one of the above-described elastic materials, and the recess 54h of the plate 54 preferably has dimensions (horizontal dimensions) suitable for the chip 24 to be tightly fitted. Furthermore, in order to prevent a gap from occurring between the upper surface of the chip 24 and the lower surface of the plate 57, the depth of the recess 54h is preferably the same as or slightly greater than the height of the chip 24.

The other features are the same as the those of the first embodiment. This embodiment can achieve the same advantages as in the first embodiment described above. The modifications shown in Figs. 9, 10, and 11 according to the first embodiment are also applicable to this embodiment.

In the third embodiment, the intermediate plate 54, which is one of the plates, has a recess 54h for the chip 24 and the lower liquid space 22 (groove 54g), so that the number of plates can be reduced compared to the second embodiment. The plate 54 of the third embodiment can be considered as an integral combination of the plates 56 and 4 of the second embodiment.

### Other Modifications

Embodiments of the present invention have been described. However, the foregoing description is not intended to limit the present invention, and various modifications including omission, addition, and substitution of structural elements may be made in so far as such modifications remain within the scope of the present invention.

For example, a compression mechanism (e.g., a clamping mechanism, screws, or a pinch) that constantly compresses the particle analysis device in a vertical direction may be used to improve sealing between the plates of the particle analysis device.

Fig. 19 is an enlarged plan view showing a part of the plate 8 on which electrodes 28 and 30 are formed in a particle analysis device according to a modification.

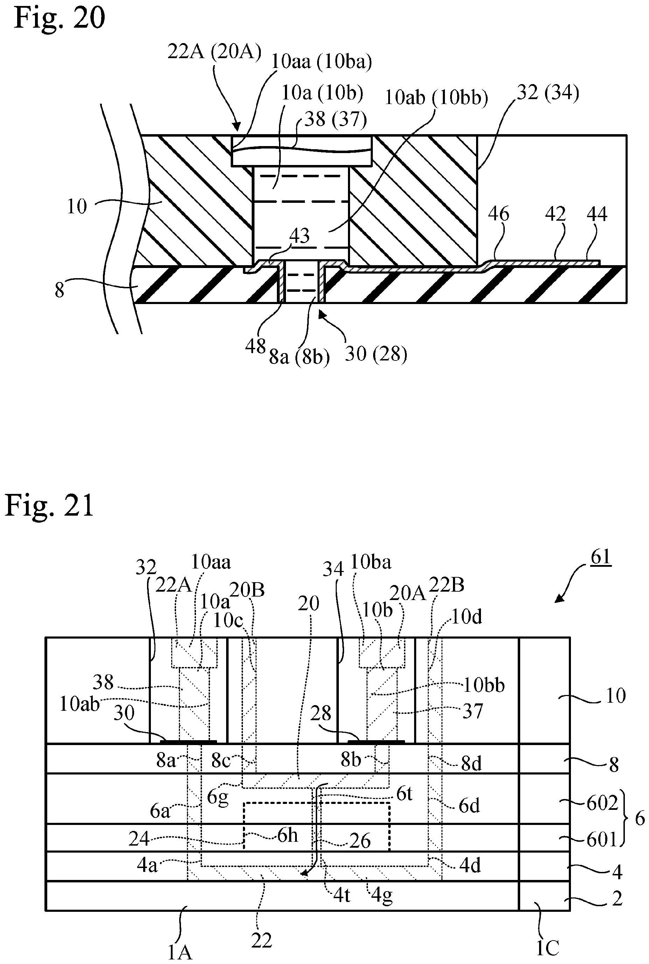

Fig. 20 is an enlarged cross-sectional view of the plate 8 and the plate 10 above it taken along line XX-XX. As shown in Figs. 19 and 20, each of the electrodes 28 and 30 formed on the plate 8 has a tubular portion 48 that is placed on the entirety of the inner peripheral surface of the through-holes 8B or 8A (a part of the first hole 20A or the third hole 22A) of the plate 8, a flat portion 42 connected to the tubular portion 48. Thus, each of the through-holes 8a and 8b has a structure similar to a via hole. Since each of the electrodes 28 and 30 has the tubular portion 48 placed on the inner peripheral surface of the through-hole 8b or 8a, the contact area of the liquid introduced into the through-hole 8b or 8a and the electrodes 28 or 30 is secured to be large, thereby improving the reliability of analysis of the particles.

The number of plates in the particle analysis device is not limited to the above embodiments. For example, Fig. 21 is a side view of a particle analysis device 61 according to another modification of the first embodiment. In the particle analysis device 61, the plate 6 is constituted of two plates 601 and 602. The through-holes 6a and 6d penetrate the two plates 601 and 602. The groove 6g, i.e., the upper liquid space 20, is formed in the upper plate 602 among the plates 601 and 602. The two plates 601 and 602 cooperate to form the recess 6h that contains the chip 24.

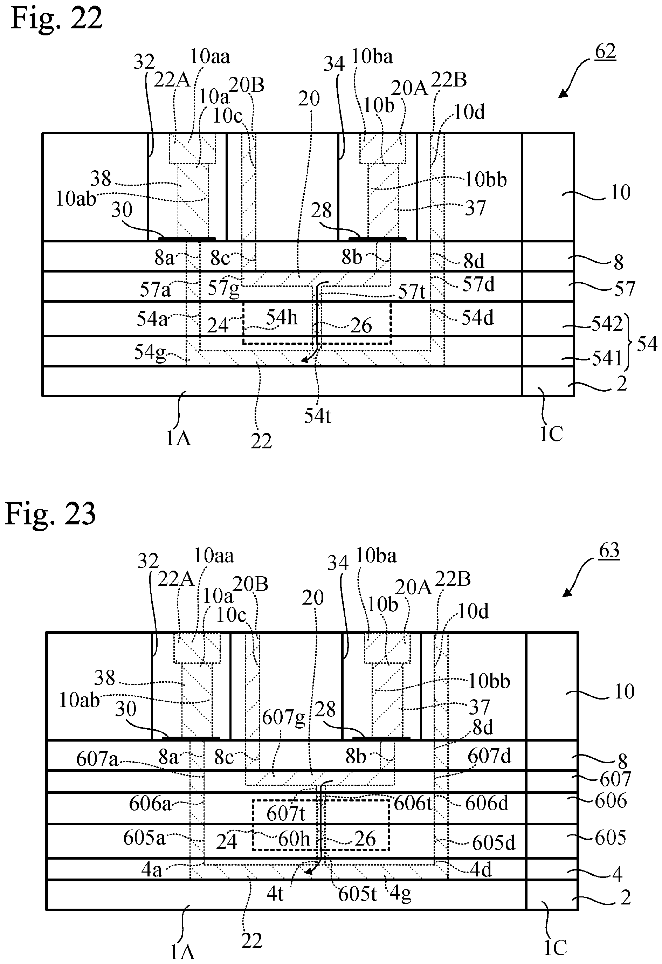

Fig. 22 is a side view of a particle analysis device 62 according to a modification of the third embodiment. In the particle analysis device 62, the plate 54 is constituted of two plates 541 and 542. The through-holes 54a and 54d penetrate the two plates 541 and 542. The groove 54g, i.e., the lower liquid space 22, is formed in the lower plate 541 among the plates 541 and 542. The two plates 541 and 542 cooperate to form the recess 54h.

Fig. 23 is a side view of a particle analysis device 63 according to another modification. The particle analysis device 63 has plates 2, 4, 605, 606, 607, 8, and 10 that are stacked and bonded together. The plate 605 has through-holes 605a and 605d, and the plate 606 has through-holes 606a and 606d. The plate 607 has through-holes 607a and 607d, a groove 607g, and a communication hole 607t. When the plates 607 and 8 are joined together, the groove 607g forms the upper liquid space 20. In the center of the groove 607g, a vertically penetrating communication hole 607t is formed. The two plates 605 and 606 cooperate to form a recess 60h that contains the chip 2. In the lower plate 605 containing the chip 24, a communication hole 605t is formed for connecting the connection pore 26 of the chip 24 with the communication hole 4t of the plate 4 and thus with the lower liquid space 22 (groove 4g). In the upper plate 606 containing the chip 24, a communication hole 606t is formed for connecting the connection pore 26 of the chip 24 with the communication hole 607t of the plate 607 and thus with the upper liquid space 20 (groove 607g).

The first hole 20A is constituted of the through-holes 10b and 8b and penetrates the plates 10 and 8 to reach one end of the groove 607g in the plate 607, i.e., the upper liquid space 20. In the middle of the first hole 20A, the first electrode 28 is provided. The second hole 20B is constituted of the through-holes 10c and 8c and penetrates the plates 10 and 8 to reach the other end of the groove 607g of the plate 607, i.e., the upper liquid space 20.

The third hole 22A is constituted of the through-holes 10a, 8a, 607a, 606a, 605a, and 4a, and penetrates the plate 10, 8, 607, 606, 605, and 4 to reach one end of the groove 4g in the plate 4, i.e., the lower liquid space 22. The second electrode 30 is provided in the middle of the third hole 22A. The fourth hole 22B is constituted of the through-holes 10d, 8d, 607d, 606d, 605d, and 4d, and penetrates the plates 10, 8, 607, 606, 605, and 4 to reach the other end of the groove 4g in the plate 4, i.e., the lower liquid space 22.

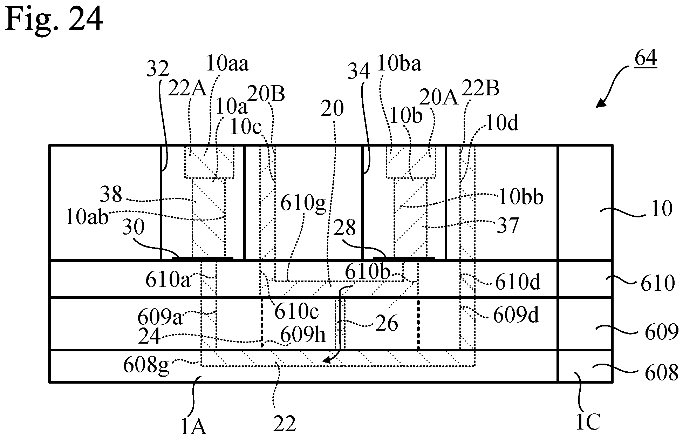

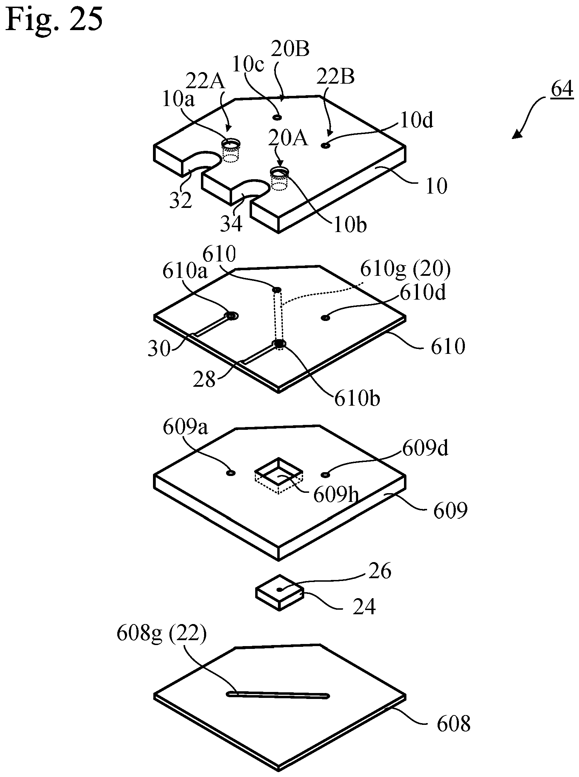

Fig. 24 is a side view of a particle analysis device 64 according to another modification. Fig. 25 is an exploded view of the particle analysis device 64 shown in Fig. 24. The particle analysis device 64 has plates 608, 609, 610, and 10 that are stacked and bonded together. A groove 608g is formed on the upper surface of the lowermost plate 608. When the plates 608 and 609 are joined together, the groove 608g forms the lower liquid space 22. The next plate 609 has through-holes 609a and 609d. The through-hole 609a communicates with one end of the groove 608g of the plate 608 immediately below it, whereas the through-hole 609d communicates with the other end of the groove 608g. In addition, in the center of the plate 609, a recess 609h for containing the chip 24 is formed.

A groove 610g is formed on the lower surface of the next plate 610. When the plates 610 and 10 are joined together, the groove 610g form the upper liquid space 20. In addition, vertically penetrating through-holes 610a, 610b, 610c, and 610d are formed in the plate 610. The through-hole 610a communicates with the through-hole 609a of the plate 609 immediately below it, and the through-hole 610d communicates with the through-hole 609d of the plate 609. The through-hole 610b communicates with one end of the groove 610g, whereas the through-hole 610c communicates with the other end of the groove 610g. On the upper surface of the plate 610, the electrodes 28 and 30 are arranged in parallel, and the first electrode 28 gives an electric potential to the liquid in the through-hole 610b, whereas the second electrode 30 gives an electric potential to the liquid in the through-hole 610a.

The first hole 20A is constituted of the through-holes 10b and 610b and penetrates the plates 10 and 610 to reach one end of the groove 610g in the plate 610, i.e., the upper liquid space 20. In the middle of the first hole 20A, the first electrode 28 is provided. The second hole 20B is constituted of the through-holes 10c and 610c and penetrates the plates 10 and 610 to reach the other end of the groove 610g of the plate 610, i.e., the upper liquid space 20.

The third hole 22A is constituted of the through-holes 10a, 610a, and 609a, and penetrates the plate 10, 610, and 609 to reach one end of the groove 608g in the plate 608, i.e., the lower liquid space 22. The second electrode 30 is provided in the middle of the third hole 22A. The fourth hole 22B is constituted of the through-holes 10d, 610d, and 609d, and penetrates the plates 10, 610, and 609 to reach the other end of the groove 608g in the plate 608, i.e., the lower liquid space 22.

Preferably, the plates 608, 609, and 610 are formed from one of the above-described elastic materials in order to prevent leakage of liquid from the liquid spaces 20 and 22 and the chip 24 and in order to prevent the chip 24 from being damaged. According to this modification, the number of plates can be significantly reduced.

In the above embodiments and modifications, openings of the first hole 20A and the third hole 22A (the larger diameter portion 10ba of the through-hole 10b and the larger diameter portion 10aa of the through-hole 10a), along which the electrodes 28 and 30 are provided, are used for air outlets and have areas greater than the areas of other portions (the rest) of the first hole 20A and the third hole 22A. However, openings of the second hole 20B and the fourth hole 22B having areas smaller than those of the first hole 20A and the third hole 22A may be used for air outlets, and in this case, the openings of the second holes 20B and the fourth holes 22B may have areas greater than the areas of other portions (the rest) of the second holes 20B and the fourth holes 22B.

Accordingly, the first hole 20A or the second hole 20B may have an opening having a greater area, and both the first hole 20A and the second hole 20B may have openings having greater areas. The third hole 22A or the second hole 20B may have an opening having a greater area, and both the third hole 22A and the fourth hole 22B may have openings having greater areas.

Aspects of the present invention are also set out in the following numbered clauses:
Clause 1. A particle analysis device comprising:
   an upper liquid space adapted to store a first liquid;
   a lower liquid space disposed below the upper liquid space and adapted to store a second liquid;
   a connection pore connecting the upper liquid space to the lower liquid space;
   a first hole having an opening that opens at a top surface of the particle analysis device, the first hole extending from the top surface of the particle analysis device to the upper liquid space, the first liquid flowing through the first hole;
   a second hole having an opening that opens at the top surface, the second hole extending from the top surface to the upper liquid space, the first liquid flowing through the second hole;
   a third hole having an opening that opens at the top surface, the third hole extending from the top surface to the lower liquid space, the second liquid flowing through the third hole;
   a fourth hole having an opening that opens at the upper surface, the fourth hole extending from the top surface to the lower liquid space, the second liquid flowing through the fourth hole;
   a first electrode adapted to apply an electric potential to the first liquid in the upper liquid space through the first hole; and
   a second electrode adapted to apply an electric potential to the second liquid in the lower liquid space through the third hole,
   the opening of at least one of the first hole and the second hole having an area that is greater than other portions of the hole,
   the opening of at least one of the third hole and the fourth hole having an area that is greater than other portions of the hole.
Clause 2. The particle analysis device according to clause 1, wherein the opening of the first hole has an area greater than that of other portions of the first hole, and the other portions of the first hole has an area greater than that of the second hole, and wherein the opening of the third hole has an area greater than that of other portions of the third hole, and the other portions of the third hole has an area greater than that of the fourth hole.
According to this clause, an electric potential is applied to the first liquid through the first hole having an area greater than the second hole, and an electric potential is applied to the second liquid through the third hole having an area greater than the fourth hole. Accordingly, potentials can be applied to the two liquids reliably, and the reliability of the particle analysis can be improved. Furthermore, since the opening having a greater area is provided in the first hole that has a greater area, when this opening is used for the air outlet, the first liquid can be effectively prevented from overflowing from the air outlet. In addition, since the opening having a greater area is provided in the third hole that has a greater area, when this opening is used for the air outlet, the second liquid 38 can be effectively prevented from overflowing from the air outlet.
Clause 3. The particle analysis device according to clause 1, having a pentagonal contour with one corner of an approximately square being cut out when viewed from above.

According to this clause, the user can easily and accurately recognize the orientation of the particle analysis device in the use of the particle analysis device.

### REFERENCE SYMBOLS

1, 51, 52, 61, 62, 63, 64: Particle analysis device
2, 4, 6, 8, 10, 54, 56, 57, 541, 542, 601, 602, 605, 606, 607, 608, 609, 610: Plate
6, 54: Intermediate plate
10a: Through-hole
10b: Through-hole
10aa: Larger diameter portion of through-hole 10a (opening of third hole 22A)
10ba: Larger diameter portion of through-hole 10b (opening of first hole 20A)
10c: Through-hole (opening of second hole 20B)
10d: Through-hole (opening of fourth hole 22B)
20: Upper liquid space
20A: First hole
20B: Second hole
22: Lower liquid space
22A: Third hole
22B: Fourth hole
24: Chip
26: Connection pore
28: First electrode
30: Second electrode
37: First liquid
38: Second liquid
40: Particles
4g, 6g, 54g, 57g, 607g, 608g, 610g: Groove
6h, 54h, 56h, 60h, 609h: Recess
6t, 54t, 57t, 605t, 607t: Communication hole
6a, 6d, 8a, 8b, 8c, 8d, 54a, 54d, 56a, 56d, 57a, 57d, 605a, 605d, 606a, 606d, 607a, 607d,
609a, 609d, 610a, 610b, 610c, 610d: Through-hole
32: First notch
34: Second notch
42: Flat portion
43: Overlapping portion
44: Exposed portion
46: Connection portion
48: Tubular portion

## Claims

1. A particle analysis device comprising:
an upper liquid space adapted to store a first liquid;
a lower liquid space disposed below the upper liquid space and adapted to store a second liquid;
a connection pore connecting the upper liquid space to the lower liquid space;
a first hole having an opening that opens at a top surface of the particle analysis device, the first hole extending from the top surface of the particle analysis device to the upper liquid space, the first liquid flowing through the first hole;
a second hole having an opening that opens at the top surface, the second hole extending from the top surface to the upper liquid space, the first liquid flowing through the second hole;
a third hole having an opening that opens at the top surface, the third hole extending from the top surface to the lower liquid space, the second liquid flowing through the third hole;
a fourth hole having an opening that opens at the upper surface, the fourth hole extending from the top surface to the lower liquid space, the second liquid flowing through the fourth hole;
a first electrode adapted to apply an electric potential to the first liquid in the upper liquid space through the first hole; and
a second electrode adapted to apply an electric potential to the second liquid in the lower liquid space through the third hole,
the opening of at least one of the first hole and the second hole having an area that is greater than other portions of the hole,
the opening of at least one of the third hole and the fourth hole having an area that is greater than other portions of the hole.

2. The particle analysis device according to claim 1, wherein the opening of the first hole has an area greater than that of other portions of the first hole, and the other portions of the first hole has an area greater than that of the second hole, and wherein the opening of the third hole has an area greater than that of other portions of the third hole, and the other portions of the third hole has an area greater than that of the fourth hole.
